# EUROPEAN PATENT SPECIFICATION

(11) **EP 2 151 168 B1**
(45) Date of publication and mention of the grant of the patent: **29.04.2015**
(21) Application number: 09167244.4
(22) Date of filing: 05.08.2009
(51) Int. Cl.: A23G 9/22, A23G 9/28

(54) **Dispenser machine for viscous food products**
Dosiermaschine für viskose Lebensmittel
Machine de dosage des denrées pâteux

(30) Priority: 08.08.2008 IT MI20081513
(43) Date of publication of application: 10.02.2010
(73) Proprietor: Telme S.P.A., 26845 Codogno (IT)
(72) Inventor: Cigolini, Aldo, 26861, Retegno-Fombio LO (IT)
(74) Representative: Branca, Emanuela

(56) References cited:
- EP-A- 0 596 722
- US-A- 4 848 381
- US-A- 5 150 820
- US-A- 5 492 249
- US-A- 6 024 248

## Description

The present invention refers to a dispenser machine for paste-like food products, in particular ice-cream. Nowadays, many machines of the aforementioned type generally comprising a framework to which a dispenser group is fastened are very common.

In such known machines the aforementioned dispenser group usually comprises a container element in which the substance to be dispensed is stored.

The dispenser group is also equipped with a piston element moveable under the action of a pressurized gas, such as air, that pushes the stored substance to be dispensed towards an outlet nozzle.

However, such machines known today have some drawbacks, including that of not ensuring an adequate level of safety for the user during the use of the machines themselves. Indeed, unfortunately, nowadays due to the pressure introduced into the container element to push the piston forward, the container element itself is often damaged and/or it detaches from the relative framework, causing damage both in terms of wasted product as well as in terms of possible injuries for the worker nearby.

Moreover, disadvantageously, such problems also occur once the dispensing has finished during the replacement steps of the container element inside of which residual pressure can indeed still be present.

Finally, it should be understood how in such machines, mainly dealing with substances such as ice-cream, cream or other paste-like food products, the substances themselves are not kept at an ideal temperature thus irreversibly ruining them at times.
US 5492249 relates to a system for safe removal of an empty collapsible container in a frozen confection dispensing apparatus.
US 4848381 relates to a system and method for cleaning ice cream cone and shake makers in place i.e. without moving the cone and shake maker from the location where it is normally used.
US 5150820 relates to an apparatus for dispensing frozen material such as ice cream or other frozen, semi-frozen or chilled confectionery.

The purpose of the present invention is that of making a machine which is able to solve the aforementioned drawbacks of the prior art in an extremely simple, cost-effective and particularly functional way.

Another purpose is that of making a dispenser machine for paste-like food products which allows the substances to be dispensed smoothly.

Another purpose is that of making a dispenser machine for paste-like food products which is safe for the user during the relative use as well as during its possible filling/loading steps.

Yet another purpose is that of being able to have a dispenser machine for paste-like food products which is able to semi automatically clean itself.

Yet another purpose is that of being able to have a dispenser machine for paste-like food products which is able to preserve the stored food products in an optimal way even those that could be ruined due to high and/or low temperatures.

These purposes according to the present invention are achieved by making a dispenser machine for paste-like food products according to claim 1 which describes a machine comprising a framework and a dispenser group associated to the framework, in which the dispenser group comprises a removable container element which is hollow, cylindrical and closed at a first end by a closure bottom.

Inside the aforementioned container element a mobile piston element is foreseen, which is able to move thanks to compressed air, from the bottom up to an opposite end of the aforementioned container element.

The machine also comprises a substance outlet group, generally fixed to the framework, able to be coupled to the opposite end of the container element, means for controlling the internal pressure of the container element as well as automatic means for discharging the pressure inside the container element which are automatically actuated in particular conditions.

Further characteristics of the invention are highlighted in the subsequent claims.

The characteristics and the advantages of a dispenser machine for paste-like food products according to the present invention shall become clearer from the following description, given as an example and not for limiting purposes, referring to the attached schematic drawings, in which:
figure 1 is a perspective view of an embodiment of a dispenser machine for paste-like food products according to the present invention;
figure 2 is a side view of the dispenser group mounted on the machine of figure 1;
figure 3 is a schematic longitudinal section view of the dispenser group of figure 2 in one of its operating steps; figure 4 is a front schematic view partially in section of the dispenser group of figure 3;
figure 5 is a schematic longitudinal section view of the dispenser group of figure 2 in another operating step; figure 6 is a front schematic view partially in section of the dispenser group of figure 5;
figure 7 is a schematic section view of a detail of the dispenser group according to the invention; and figure 8 is a rear view of the dispenser group, in its open configuration, according to the invention.

With reference to the figures, a dispenser machine for paste-like food products, such as, in particular ice-cream, but also cream and others, is shown with the numeral 10 and the relative dispenser group with the numeral 100.

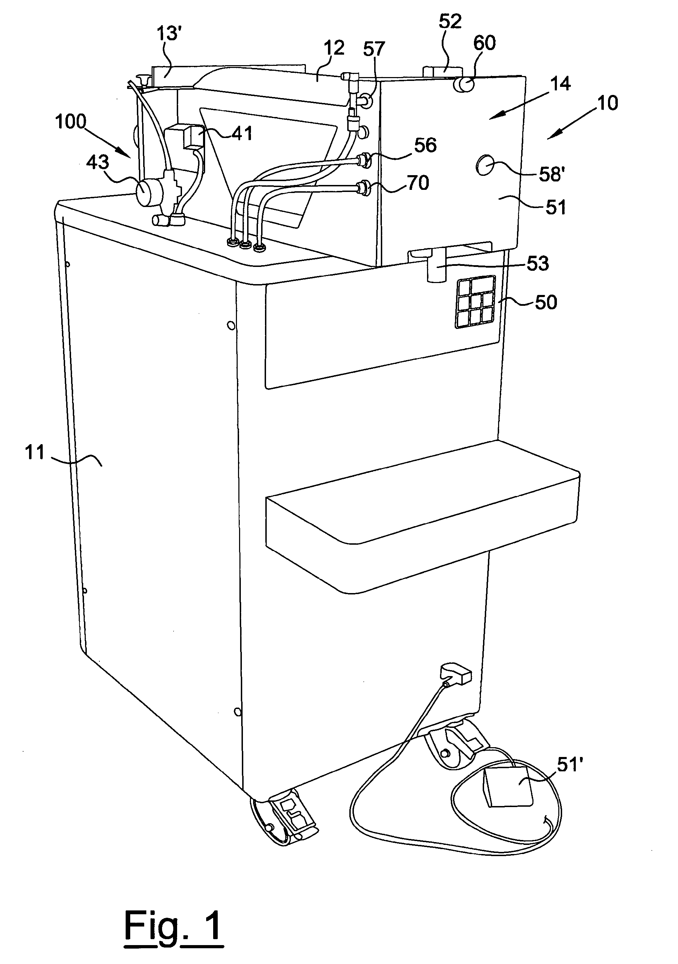

As shown in figure 1 the dispenser machine 10 for paste-like food products comprises a framework 11 and a group 100 for dispensing the aforementioned substances associated, preferably above, to the framework 11 in which such a dispenser group 100 comprises a container element 12 for the substances to be dispensed.

The aforementioned container element 12, preferably made from a plastic material or polyacetal, can be removed manually by a worker, and is of the hollow cylindrical type, closed at a first end by a possibly removable closure bottom 13 which is also made from polyacetal.

A piston element 15, preferably also made from polyacetal and equipped with a radial sealing gasket 17, is accommodated inside the container element 12, said piston element 15 being moveable from the first end, that of the bottom 13, up to an opposite end of the container element 12, said opposite end being open and used while loading the substances to be dispensed.

Accommodated in the framework 11 a compressor is foreseen, of the pneumatic type equipped with relative electrovalves, circuit boards and an air-reservoir, said compressor being connected to the first end of the container element 12 and moving the piston element through introduction of compressed air into the container element 12 through a hole 16 formed in the closure bottom 13.

The machine 10 also comprises an outlet group 14 for the substances contained inside the container element 12, said outlet group 14, during the use of the machine 10, being able to be coupled, for example lock-coupled, to the open end of the container element 12.

In such a way the piston 15, moving by effect of the thrust exerted by the compressed air from the first to the second opposite end of the container element 12, provides for conveying the substance to be dispensed towards the outlet group 14 for dispensing the substance itself.

According to the invention, means for controlling the internal pressure of the container element 12, which as mentioned above, provides for moving the piston 15, are also foreseen.

There are also automatic means for discharging the internal pressure of the container element 12 which only act in certain conditions.

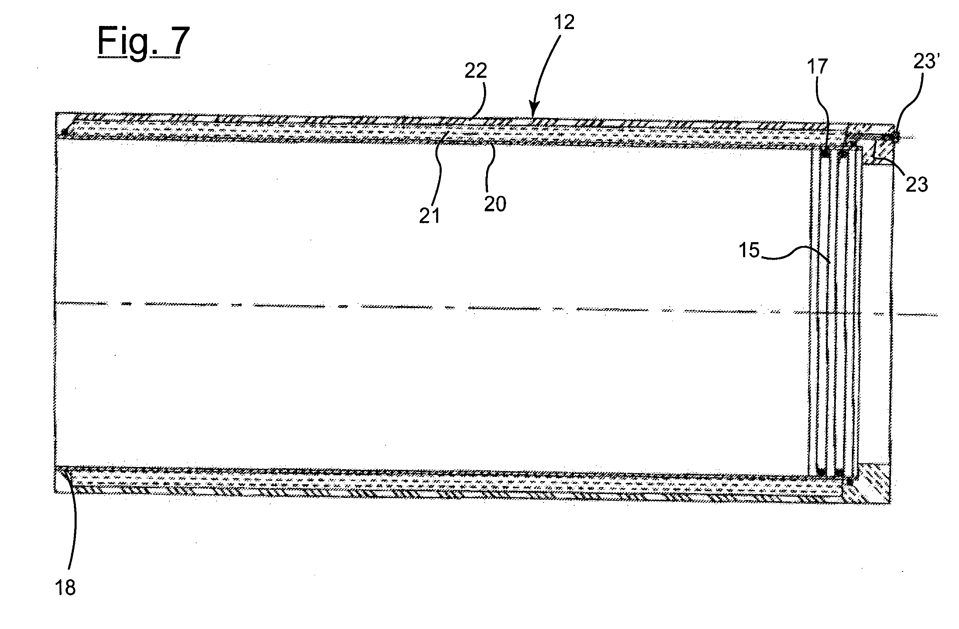

According to a first preferred embodiment, shown in figure 7, the side walls of the container element 12 comprise a first internal wall 20 and a second external wall 22 separated by a void chamber 24.

Advantageously such a void chamber 24 can be filled with liquid or gel, for example, of the type with high thermal refrigeration capacity, i.e., able to remain cold for a long period of time, in the case in which ice-cream is being dispensed.

In such a case the container element 12 must be chilled in advance, for example, by leaving it for a period in a freezer, so as to lower the temperature of the aforementioned high thermal capacity liquid or gel.

Such a liquid is introduced through a hole 23, which can be closed by a plug 23', which connects the void chamber 24 with the outside.

In particular in the embodiment just described the first internal wall 20 is preferably made from AISI304 type steel, whereas the second external wall 22, as already mentioned previously for the piston 15 and the bottom 13, is preferably made from polyacetal.

In order to ensure a high level of safety for the user, the dispenser machine 10 for paste-like food products according to the present invention comprises a suitable accommodation seat of the container element 12, possibly connected at its top to the framework 11, as well as means for blocking the container element 12 in the aforementioned accommodation seat.

In particular, as described previously, the container element 12 is selectively removable from the rest of the machine either to allow the same container element 12 to be reloaded with another substance to be dispensed, through filling from the second opposite end, or to allow it to be replaced with another container element 12.

The assembly of the container element 12 on the machine 10 occurs by coupling the second open end of the container element 12, equipped with seals 18, with a rear portion of the outlet group 14, for example through lock-coupling or rotatable coupling around a pin.

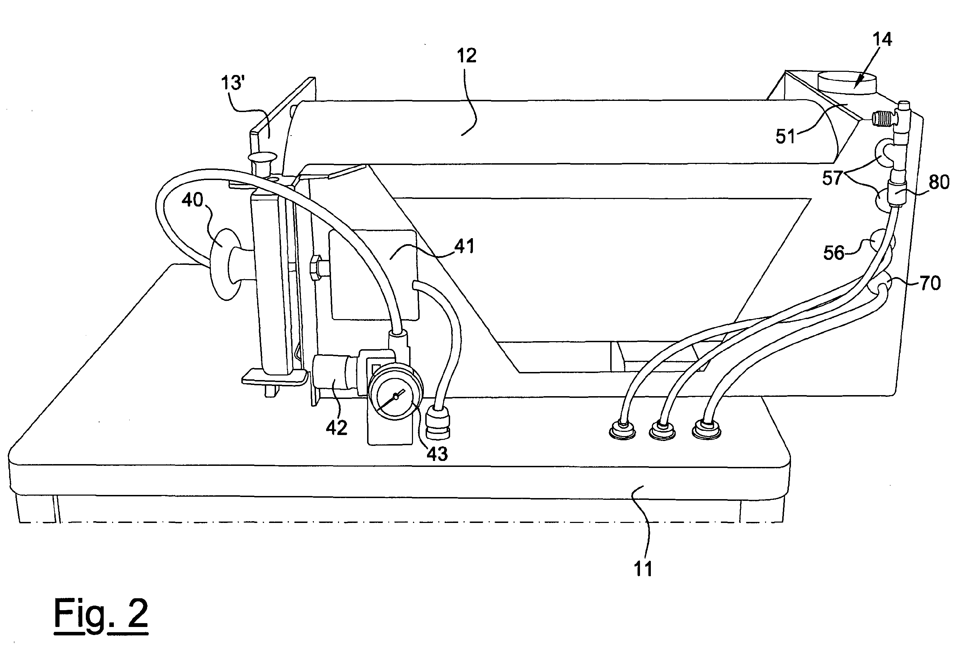

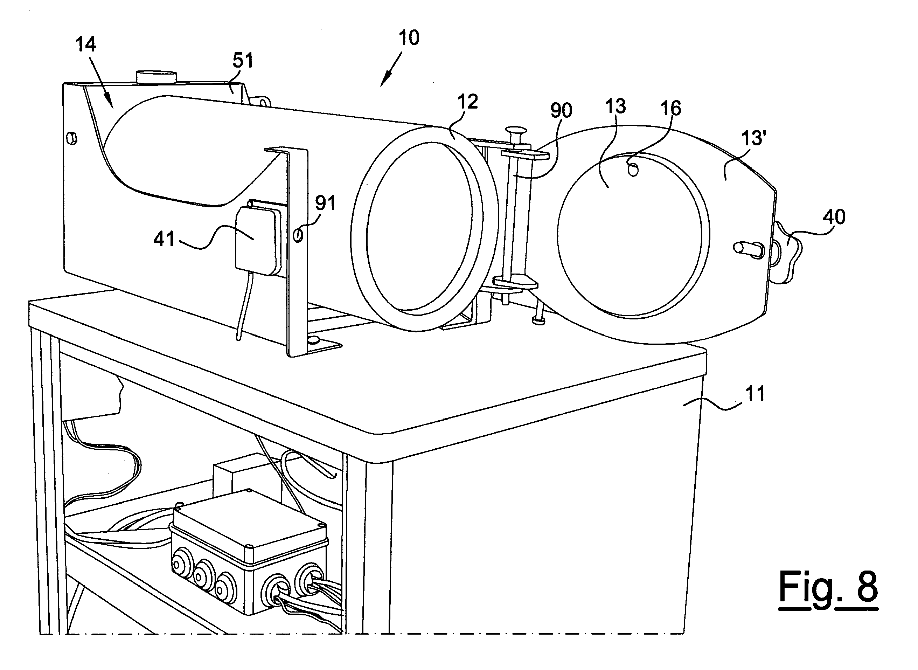

As shown in figure 2, the blocking means foreseen for fastening the container element 12 during the dispensing in the aforementioned position, i.e., when the pressurized gas is introduced, comprise, as shown in figure 8, a closure door 13' integral with the bottom 13.

Such a closure door 13', preferably made from steel, comprises a hole 16' associated to the hole 16 of the bottom 13 for the pressurized gas to pass from the compressor to the piston 15.

As again shown in figure 8 the closure door 13' is able to rotate around a pin 90 and it is equipped with a knob 40 comprising a threaded projection.

Such a knob 40 is fastened at a first end, i.e., that of the knob 40 itself, to the door 13' whereas the other opposite end, the threaded end, can be associated with a hole 91, also possibly threaded formed on a portion integral with the framework 11 (and with a relative nut).

According to what has just been described, whilst closing the door 13' through the knob 40, a screw/nut coupling occurs in the hole 91 in which by rotating the knob 40, the door 13' is properly blocked until it is pushed at its rear against the bottom 13 thus blocking the container element 12 in the framework 11.

As previously mentioned, the dispenser machine 10 for paste-like food products according to the present invention comprises automatic means for discharging the pressure inside of the container element 12 which, according to a preferred embodiment shown in figure 2, foresee an electromechanical sensor with a sensing device 41 placed in a position facing them at the threaded end of the knob 40. In particular such an eletromechanical sensor with a sensing device 41 acts as a further safety means for the user during the use of the machine 10 by commanding a pressure vent valve to automatically open/close in the case in which the closure door 13' is not suitably pressed against the bottom 13.

Indeed in such a case, i.e., when it is not correctly closed, the threaded end of the knob 40 does not touch the sensor 41 which, not closing the aforementioned vent valve, does not allow the pressure inside the container element 12 to be increased at all.

As said this is possible thanks to the fact that the sensor 41 automatically closes a vent valve.

Such a vent valve is also activated by the sensor 41 in the case in which the user, acting upon the knob 40, is attempting to release the container element 12 in which however, there is still residual internal pressure.

Together with the aforementioned sensor 41, again with the purpose of providing a dispenser machine 10 for paste-like food products which is very safe for the user, it is foreseen to have control/monitoring means of the pressure inside the container element 12 acting upon the piston 15, such as at least one pressure reducer 42, placed between the compressor and the piston 15, as well as a manometer 43 for reading the pressure being used.

In such a way it is therefore possible to both monitor the pressure discharged by the compressor, through the reading manometer 43, as well as adjust it according to the substance to be dispensed by acting upon the reducer 42.

As shown in figure 1, the dispenser machine 10 comprises means for controlling the dispenser group 100, connected with an electronic power circuit board, such as a keypad 50 and/or a pedal 51' and/or a handle, not shown and possibly connected to a tubular element for manual dispensing which extends from the outlet group 14.

Such control means can in particular induce the compressor, and therefore the machine 10, to dispense continuously, with a timer and/or manually according to the user's needs.

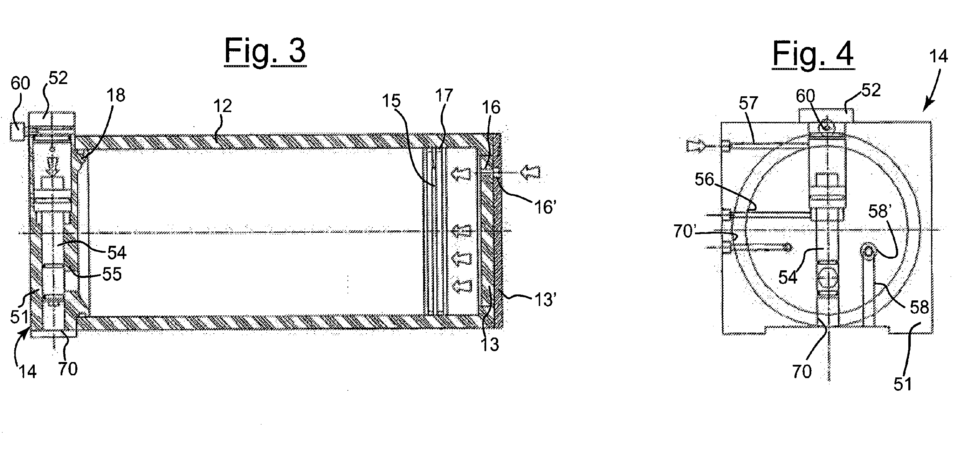

As visible in the figures 3-6 in section, the previously described outlet group 14, preferably comprises a tap block 51, which is hollow inside and closed at the top by a lid 52 made from polyacetal, and is generally made from Ertalyte. At the bottom the tap block 51 is instead equipped with a dispenser opening 70, which can possibly be provided with a garnishing nozzle and/or a tubular element for manual garnishing.

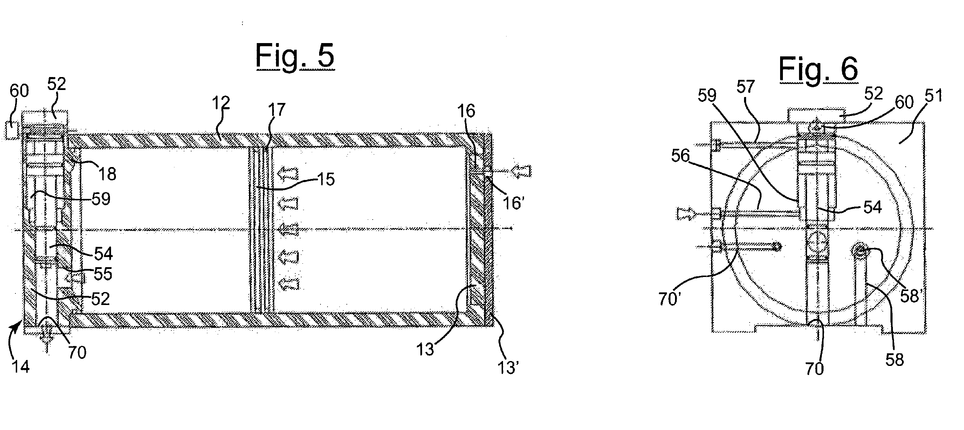

Inside the tap block 51 there is a plug 54, also generally made from Ertalyte, and which is movable from a first lowered position, shown in figures 3 and 4, in which it obstructs a passage 55 from the container element 12 to the outlet group 14 up to a second raised position, shown in figures 5 and 6, in which it frees the aforementioned passage 55 allowing the substance to come out pushed towards the outlet group 14 by the piston 15 by effect of the pressure introduced by the compressor inside the container element 12.

As visible in figures 3 and 5 end-stop means of the plug 54 are foreseen such as a lower abutment surface 59 and an upper pin 60.

In particular motion means which actuate the lifting and the lowering of the plug 54 comprise two suitable ducts 56, 57 for the pressurized gas, also connected to the compressor through a five-way valve, said ducts 56, 57 being formed in the tap block 51 and being selectively fed with pressurized gas to raise or lower the plug 54.

Again in the tap block 51 a further vent pipe 58 is foreseen, possibly equipped with a button valve 58', suitable for letting out possible gas from inside the container element 12 on the side where the substance to be dispensed is stored, so as to ensure a continuous and optimal dispensing of the product.

Also a vent valve 80 is foreseen associated with the tap block 51 for discharging the internal pressure acting upon the plug 54.

Finally, to provide for a semiautomatic cleaning, the tap block 51 comprises a duct 70', connected to the water distribution system, for the passage of cleaning water in the seat of the plug 54, in the dispenser opening 70, as well as in the front part of the piston and in the nozzle if there is one.

Preferably, such a cleaning step, which can also be activated by the keypad 50, is actuated when the piston 15 has reached the second end of the container element 12.

It is simple to understand what the operation of the device object of the finding is.

After filling the container element 12 with the product to be dispensed, i.e., after introducing the substance into the container element 12 from the open end opposite the bottom 13 on which the piston 15 is positioned at rest, the aforementioned open end is then fastened to a rear portion of the tap block 51 and the container element 12 is fastened onto the framework 11 in such a position through the rotation firstly of the movable door 13' and then of the knob 40.

In such a condition, if the movable door 13' has been locked correctly and the knob 40 properly rotated, it is possible to insert the compressed air coming from the compressor. Such a pressure can be controlled/adjusted by the user through the reading manometer 43 and the reducer 42.

By actuating the machine in the desired way, i.e., on a timer or continuously or manually through the keypad 50 and/or the pedal 51 and/or the handle, a tap/valve for introducing pressurized air is opened making the air flow together from the compressor to the plug 54 freeing the dispenser opening 70 and forcing out the product to be dispensed, which is pushed by the piston 15 towards the outlet group 14. Preferably, before such an operation described above, and clear in figure 3, it is possible to act upon the button 58' to expel possible air in the portion of the container element 12 filled with the product which is to be dispensed.

It is thus clear that inside of the container element 12 two variable volumes can be identified, the first of which contains the product to be dispensed "CP", product chamber, and the second one where pressurized compressed air is introduced "CA", air chamber.

The separation between such two volumes, as shown in figures 3 and 5, is defined by the mobile piston 15. During dispensing, see figure 5, the CP volume will tend to empty out while the CA volume will almost totally take over the container element 12 until the container element 12 itself is emptied out; this emptying out is also allowed by the movement of the plug 54 which frees the passage 55 from the container element 12 to the dispensing opening 70 of the tap block 51.

When finished dispensing it is possible to remove the container element 12 by preliminarily acting upon the keypad and, according to the invention, also such a removal is carried out without danger since the sensor 41 will automatically provide for actuating the vent valve for discharging possible residual pressure inside of the container element 12 as soon as the user releases the handle 40, in the case in which the user has not discharged the pressure by acting upon the keypad.

It has thus been seen that a dispenser machine for paste-like food products according to the present invention achieves the purposes previously highlighted.

Indeed the dispenser machine for paste-like food products, according to the present invention can carry out a smooth dispensing and is extremely safe for the user both during its use and during its possible filling/loading steps.

Moreover the dispenser machine for paste-like food products according to the present invention provides for semi automatically cleaning itself as well as allowing the substances to be dispensed to maintain their optimal properties while stored inside of it.

The dispenser machine for paste-like food products of the present invention thus conceived can undergo numerous modifications and variants, all covered by the same inventive concept; moreover all the details can be replaced by technically equivalent elements. In practice the materials used, as well as their sizes, can be any according to the technical needs.

## Claims

1. Dispenser machine (10) for paste-like food products comprising a framework (11), and a group (100) for dispensing said substances associated to said framework (11), said dispenser group (100) comprising a removable hollow cylindrical element (12) for containing said substances, closed at a first end by a closure bottom (13), a piston element accommodated inside said container element (12) moveable from said first end up to an opposite end of said container element (12) for filling said substances, provided for being a compressor accommodated inside said framework (11) and connected to said first end of said container element (12) for moving said piston element through compressed air, said machine further comprising an outlet group (14) for said substances coupled to said opposite end of said container element (12), provided for being means for controlling the internal pressure of said container element (12) as well as automatic means for reducing the internal pressure of said container element (12), **characterised in that** it comprises a seat for accommodating said container element (12) and means for blocking said container element (12) into said accommodation seat, said means for blocking said container element (12) into said accommodation seat comprising a closure door (13') integral with said bottom (13), said closure door (13') being moveable in rotation around a pin (90) and being provided with a threaded rotating knob (40) constrained at an end against said closure door (13') and associable in a threaded manner at the other end with a support integral with said framework (11), said automatic means for releasing the internal pressure of said container element (12) comprising an electromechanical sensor (41) with a sensing device arranged at a position at the threaded end of said knob (40) and connected to a vent valve.

2. Dispenser machine (10) for paste-like food products according to claim 1 **characterised in that** the said walls of said container element (12) comprise a first internal wall (20) and a second external wall (22) separated by a void chamber (24).

3. Dispenser machine (10) for paste-like food products according to claim 2 **characterised in that** said void chamber (24) contains high thermal capacity liquid or gel.

4. Dispenser machine (10) for paste-like food products according to claim 1 **characterised in that** said means for controlling the internal pressure of said container element (12) comprise a pressure reducer (42) arranged between said compressor and said piston and a manometer (43) for reading said internal pressure.

5. Dispenser machine (10) for paste-like food products according to claim 1 **characterised in that** it comprise means for controlling/actuating said dispenser group (100).

6. Dispenser machine (10) for paste-like food products according to claim 1 **characterised in that** said outlet group (14) comprises a hollow tap block (51) provided at the upper part with a cover (52) and at the lower part with an opening for dispensing said substance, further provided for being a vent pipe (58) and a plug (54) moveable from a first position in which it blocks the passage (55) between said container element (12) and said dispenser opening (70) and a second position in which it frees said passage (55).

7. Dispenser machine (10) for paste-like food products according to claim 6 **characterised in that** it comprises means for moving said plug (54), said means comprising a first compressed air pipe (56) at a lower portion of said plug for raising the same and a second compressed air pipe (57) at an upper portion of said plug for lowering the same.

8. Dispenser machine (10) for paste-like food products according to claim 6 **characterised in that** said tap block (51) comprises a pipe for the passage of water (58) for cleaning said dispenser opening (70).

## Patentansprüche

1. Dosiermaschine (10) für pastöse Nahrungsmittelprodukte, die ein Gestell (11) und eine mit dem Gestell (11) verbundene Einheit (100) zum Ausgeben dieser Stoffe umfasst, wobei die Ausgabeeinheit (100) ein ausbaubares Hohlzylinderelement (12) zum Enthalten dieser Stoffe, das an einem ersten Ende von einem Verschlussboden (13) verschlossen wird, und ein in dem Behälterelement (12) untergebrachtes Kolbenelement umfasst, das sich zum Einfüllen der Stoffe vom ersten Ende zu einem entgegengesetzten Ende des Behälterelements (12) bewegen kann, wobei ein Verdichter vorgesehen ist, der in dem Gestell (11) untergebracht und mit dem ersten Ende des Behälterelements (12) verbunden ist, um das Kolbenelement mittels Druckluft zu bewegen, wobei diese Maschine ferner eine Auslasseinheit (14) für diese Stoffe umfasst, die mit dem entgegengesetzten Ende des Behälterelements (12) gekoppelt ist, wobei Mittel zum Steuern des Innendrucks des Behälterelements (12) und automatische Mittel zum Verringern des Innendrucks des Behälterelements (12) vorgesehen sind, **dadurch gekennzeichnet, dass** sie einen Sitz für die Unterbringung des Behälterelements (12) und Mittel zum Verriegeln des Behälterelements (12) in dem Aufnahmesitz umfasst, wobei die Mittel zum Verriegeln des Behälterelements (12) in dem Aufnahmesitz eine Verschlusstür (13') umfassen, die integral mit dem Boden (13) ist, wobei die Verschlusstür (13') um einen Zapfen (90) drehbar und mit einem Gewindedrehknopf (40) versehen ist, der an einem Ende gegen die Verschlusstür (13') gezwungen und am anderen Ende mit Gewindeeingriff mit einem mit dem Gestell (11) integralen Träger verbunden werden kann, wobei die automatischen Mittel zum Ablassen des Innendrucks des Behälterelements (12) einen elektromechanischen Sensor (41) mit einer Abtasteinrichtung umfassen, der in einer Position bei dem Gewindeende des Knopfs (40) angeordnet und mit einem Entlüftungsventil verbunden ist.

2. Dosiermaschine (10) für pastöse Nahrungsmittelprodukte nach Anspruch 1, **dadurch gekennzeichnet, dass** die Wände des Behälterelements (12) eine erste Innenwand (20) und eine zweite Außenwand (22) umfassen, die von einer Leerkammer (24) getrennt werden.

3. Dosiermaschine (10) für pastöse Nahrungsmittelprodukte nach Anspruch 2, **dadurch gekennzeichnet, dass** die Leerkammer (24) eine Flüssigkeit oder ein Gel mit hoher Wärmekapazität enthält.

4. Dosiermaschine (10) für pastöse Nahrungsmittelprodukte nach Anspruch 1, **dadurch gekennzeichnet, dass** die Mittel zum Steuern des Innendrucks des Behälterelements (12) einen Druckminderer (42), der zwischen dem Verdichter und dem Kolben angeordnet ist, und ein Druckmessgerät (43) zum Messen des Innendrucks umfassen.

5. Dosiermaschine (10) für pastöse Nahrungsmittelprodukte nach Anspruch 1, **dadurch gekennzeichnet, dass** sie Mittel zum Steuern/Betätigen der Ausgabeeinheit (100) umfasst.

6. Dosiermaschine (10) für pastöse Nahrungsmittelprodukte nach Anspruch 1, **dadurch gekennzeichnet, dass** die Auslasseinheit (14) einen hohlen Hahnblock (51) umfasst, der am Oberteil mit einem Deckel (52) und am Unterteil mit einer Öffnung zum Ausgeben des Stoffes versehen ist, wobei ferner ein Entlüftungsrohr (58) und ein Pfropfen (54), der sich aus einer ersten Stellung, in der er den Durchgang (55) zwischen dem Behälterelement (12) und der Ausgabeöffnung (70) versperrt, in eine zweite Stellung, in der er diesen Durchgang (55) freigibt, bewegen kann, vorgesehen sind.

7. Dosiermaschine (10) für pastöse Nahrungsmittelprodukte nach Anspruch 6, **dadurch gekennzeichnet, dass** sie Mittel zum Bewegen des Pfropfens (54) umfasst, wobei diese Mittel ein erstes Druckluftrohr (56) an einem unteren Teil des Pfropfens zum Anheben desselben und ein zweites Druckluftrohr (57) an einem oberen Teil des Pfropfens zum Absenken desselben umfassen.

8. Dosiermaschine (10) für pastöse Nahrungsmittelprodukte nach Anspruch 6, **dadurch gekennzeichnet, dass** der Hahnblock (51) ein Rohr für den Durchfluss von Wasser (58) zum Reinigen der Ausgabeöffnung (70) umfasst.

## Revendications

1. Machine distributrice (10) pour produits alimentaires pâteux comprenant une structure (11) et un groupe (100) de distribution desdites substances associé à ladite structure (11), ledit groupe distributeur (100) comprenant un élément cylindrique creux amovible (12) pour contenir lesdites substances, fermé à une première extrémité par un fond de fermeture (13), un élément de piston logé à l'intérieur dudit élément conteneur (12) mobile de ladite première extrémité à une extrémité opposée dudit élément conteneur (12) pour remplir lesdites substances, un compresseur étant prévu, logé à l'intérieur de ladite structure (11) et connecté à ladite première extrémité dudit élément conteneur (12), pour déplacer ledit élément de piston au moyen d'air comprimé, ladite machine comprenant en outre un groupe de sortie (14) pour lesdites substances, couplé à ladite extrémité opposée dudit élément conteneur (12), des moyens étant prévus pour contrôler la pression interne dudit élément conteneur (12), ainsi que des moyens automatiques pour réduire la pression interne dudit élément conteneur (12), **caractérisée en ce qu'**elle comprend un siège pour loger ledit élément conteneur (12) et des moyens pour bloquer ledit élément conteneur (12) dans ledit siège de logement, lesdits moyens pour bloquer ledit élément conteneur (12) dans ledit siège de logement comprenant une porte de fermeture (13') solidaire dudit fond (13), ladite porte de fermeture (13') étant mobile en rotation autour d'un axe (90) et étant munie d'une poignée rotative filetée (40) contrainte à une extrémité contre ladite porte de fermeture (13') et associable par vissage à l'autre extrémité à un support solidaire de ladite structure (11), lesdits moyens automatiques pour libérer la pression interne dudit élément conteneur (12) comprenant un capteur électromagnétique (41) avec un dispositif de détection agencé dans une position au niveau de l'extrémité filetée de ladite poignée (40) et connecté à une vanne de purge.

2. Machine distributrice (10) pour produits alimentaires pâteux selon la revendication 1, **caractérisée en ce que** lesdites parois dudit élément conteneur (12) comprennent une première paroi interne (20) et une deuxième paroi externe (22) séparée par une chambre vide (24).

3. Machine distributrice (10) pour produits alimentaires pâteux selon la revendication 2, **caractérisée en ce que** ladite chambre vide (24) contient un liquide ou gel à haute capacité thermique.

4. Machine distributrice (10) pour produits alimentaires pâteux selon la revendication 1, **caractérisée en ce que** lesdits moyens pour contrôler la pression interne dudit élément conteneur (12) comprennent un réducteur de pression (42) agencé entre ledit compresseur et ledit piston et un manomètre (43) pour lire ladite pression interne.

5. Machine distributrice (10) pour produits alimentaires pâteux selon la revendication 1, **caractérisée en ce qu'**elle comprend des moyens pour contrôler/actionner ledit groupe distributeur (100).

6. Machine distributrice (10) pour produits alimentaires pâteux selon la revendication 1, **caractérisée en ce que** ledit groupe de sortie (14) comprend un bloc de tirage creux (51) muni au niveau de la partie supérieure d'un couvercle (52) et au niveau de la partie inférieure d'une ouverture pour distribuer ladite substance, étant prévus en outre un tube de purge (58) et un obturateur (54) mobile entre une première position dans laquelle il bloque le passage (55) entre ledit élément conteneur (12) et ladite ouverture de distribution (70) et une deuxième position dans laquelle il libère ledit passage (55).

7. Machine distributrice (10) pour produits alimentaires pâteux selon la revendication 6, **caractérisée en ce qu'**elle comprend des moyens pour déplacer ledit obturateur (54), lesdits moyens comprenant un premier tube d'air comprimé (56) au niveau d'une portion inférieure dudit obturateur pour soulever celui-ci et un deuxième tube d'air comprimé (57) au niveau d'une portion supérieure dudit obturateur pour abaisser celui-ci.

8. Machine distributrice (10) pour produits alimentaires pâteux selon la revendication 6, **caractérisée en ce que** ledit bloc de tirage (51) comprend un tube pour le passage d'eau (58) pour nettoyer ladite ouverture de distribution (70).
